(19) Europäisches Patentamt
European Patent Office
Office européen des brevets

(11) Veröffentlichungsnummer: **0 242 331 B1**

(12) **EUROPÄISCHE PATENTSCHRIFT**

(45) Veröffentlichungstag der Patentschrift: **30.12.92**

(51) Int. Cl.5: **C09B 29/033**, D06P 1/39, C09D 11/00

(21) Anmeldenummer: **87810227.6**

(22) Anmeldetag: **09.04.87**

(54) **Azofarbstoffe.**

(30) Priorität: **16.04.86 CH 1521/86**

(43) Veröffentlichungstag der Anmeldung:
**21.10.87 Patentblatt 87/43**

(45) Bekanntmachung des Hinweises auf die Patenterteilung:
**30.12.92 Patentblatt 92/53**

(84) Benannte Vertragsstaaten:
**AT BE CH DE ES FR GB IT LI SE**

(56) Entgegenhaltungen:
**FR-A- 2 139 145**
**GB-A- 922 839**
**US-A- 4 285 861**

**CHEMICAL ABSTRACTS OF JAPAN, Band 83, 1975, Seite 173, Zusammenfassung Nr. 61597k, Columbus, Ohio, US; A.M. OSMAN et al.: "Heterocyclic compounds. V. Preparation of some new napththoxazole dyes and highly stable diazonium salts", & INDIAN J. CHEM. 1974, 12(1), 48-50**

(73) Patentinhaber: **CIBA-GEIGY AG**
**Klybeckstrasse 141**
**CH-4002 Basel(CH)**

(72) Erfinder: **Adam, Jean-Marie, Dr.**
**Rue de Village Neuf 60 D**
**F-68300 Rosenau(FR)**

**EP 0 242 331 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Azofarbstoffe, Verfahren zu deren Herstellung sowie deren Verwendung zum Färben von Textilmaterialien, Leder, Tinten und insbesondere Papier.

Gegenstand der Erfindung sind Azofarbstoffe der Formel

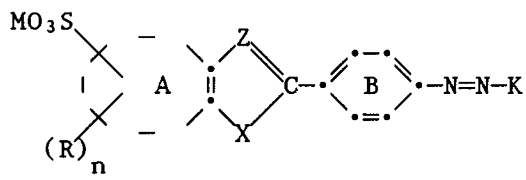

(1)

oder deren tautomere Formen, worin bedeuten:

- Z N oder CH,
- X O, $NR_1$ oder N,
- K eine Verbindung der Formel

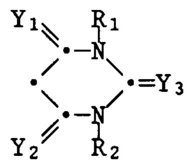

(2)

worin

- $Y_1$ und $Y_2$ unabhängig voneinander =O, =NH oder $=N-C_1-C_6$-Alkyl,
- $Y_3$ =O, =S, $=NR_1$ oder =N-CN und
- $R_1$ und $R_2$ unabhängig voneinander Wasserstoff, gegebenenfalls substituiertes $C_1-C_6$-Alkyl oder gegebenenfalls substituiertes Phenyl

bedeuten oder der Formel

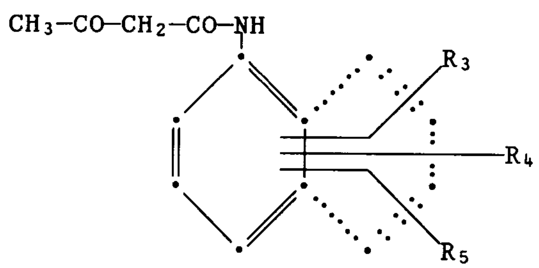

(3)

worin $R_3$, $R_4$ und $R_5$ jeweils unabhängig voneinander Wasserstoff, $C_1-C_4$-Alkyl, $C_1-C_4$-Alkoxy, Chlor, Brom, Nitro oder Sulfo bedeuten oder der Formel

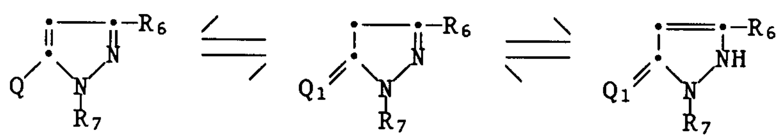

(4),

worin Q OH oder $NH_2$, $Q_1$ O oder NH, $R_7$ H, $C_1-C_4$-Alkyl, Alkenyl, Cycloalkyl, Aryl, vor allem Phenyl, Benzyl oder Phenylethyl und $R_6$ gleich $R_7$ oder $COOR_7$ oder $CONHR_7$ ist,

- R Wasserstoff, $C_1-C_6$-Alkyl, $C_1-C_4$-Alkoxy, Halogen, Nitro, -CN, $-NHR_1$, -NH-Acyl, Phenoxy, -COOH, $COOR_1$, $-CONHR_1$ oder gegebenenfalls substituiertes Phenyl, wobei $R_1$ Wasserstoff, gegebenenfalls substituiertes $C_1-C_6$-Alkyl oder gegebenenfalls substituiertes Phenyl bedeutet,
- M $H^{\oplus}$, $Li^{\oplus}$, $Na^{\oplus}$, $K^{\oplus}$, $NH_4^{\oplus}$ oder die protonierte Form eines $C_4-C_{12}$-Trialkylamins, $C_4-C_{12}$-Diamins oder

$C_2$-$C_{12}$-Alkanolamins,

A einen Benzol- oder Pyridinrest, der gegebenenfalls weitersubstituiert ist,

B einen gegebenenfalls weitersubstituierten 1,4-Phenylenrest und

n 1, 2 oder 3.

Stellen $R_1$ und/oder $R_2$ eine gegebenenfalls substituierte $C_1$-$C_6$-Alkylgruppe dar, so ist darunter wie generell in dieser Anmeldung z.B. ein Methyl-, Ethyl-, n- oder iso-Propyl-, n-, sec.- oder tert.-Butyl-, ein geradkettiger oder verzweigter Pentyl- oder Hexyl- oder ein Cyclohexylrest zu verstehen, der einfach oder mehrfach z.B. durch -OH, $C_1$-$C_4$-Alkoxy oder $C_1$-$C_4$-Hydroxyalkoxy substituiert sein kann.

Beispiele für geeignete substituierte $C_1$-$C_6$-Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl und 2-Hydroxyethoxypentyl.

Bedeuten $R_1$ und/oder $R_2$ gegebenenfalls substituiertes Phenyl, so kann es sich um unsubstituiertes oder einfach oder mehrfach mit gleichen oder verschiedenen Resten substituiertes Phenyl handeln. Als derartige Reste kommen z.B. in Frage: $C_1$-$C_4$-Alkyl, worunter in dieser Anmeldung generell Methyl, Ethyl, n- oder iso-Propyl oder n-, sec.- oder tert.-Butyl zu verstehen ist, $C_1$-$C_4$-Alkoxy, welches in dieser Anmeldung generell, Methoxy, Ethoxy, n- oder iso-Propoxy oder n-, sec.- oder tert.-Butoxy umfasst, Halogen wie Fluor, Chlor oder Brom, Nitro oder Sulfo.

Vorzugsweise handelt es sich bei $R_1$ und/oder $R_2$ als Phenyl um unsubstituiertes oder mit 1 bis 3 $C_1$-$C_4$-Alkyl-, Chlor oder Methoxygruppen substituiertes Phenyl, wobei insbesondere die Bedeutung unsubstituiertes Phenyl bevorzugt ist.

$R_1$ und/oder $R_2$ stehen bevorzugt für Wasserstoff oder $C_1$-$C_4$-Alkyl und besonders bevorzugt für Wasserstoff.

$Y_1$ und/oder $Y_2$ stehen vorzugsweise für die funktionelle Gruppe =O oder =NH, wobei es ausserdem bevorzugt ist, dass $Y_1$ und $Y_2$ gleich sind. $Y_1$ und $Y_2$ sind besonders bevorzugt gleich und bedeuten jeweils =O.

Ist $Y_3$ =$NR_1$, so gelten für $R_1$ die zuvor genannten Bedeutungen und Bevorzugungen.

$Y_3$ stellt bevorzugt die Gruppe =O, =NH oder =N-CN und insbesondere bevorzugt die Gruppe =O dar.

In einer besonders bevorzugten Ausführungsform der erfindungsgemässen Azofarbstoffe stehen $Y_1$, $Y_2$ und $Y_3$ jeweils für =O.

In den Farbstoffen der Formel (1) bedeutet R Wasserstoff, $C_1$-$C_6$-Alkyl, $C_1$-$C_4$-Alkoxy, Halogen, Nitro, CN, -$NHR_1$, -NH-Acyl, Phenoxy, -COOH, -$CONHR_1$ oder gegebenenfalls substituiertes Phenyl, wobei 1 bis 3 dieser Reste, die gleich oder verschieden sein können, vorhanden sind.

Stellt R einen Rest -$NHR_1$ oder -$CONHR_1$ dar, so gelten für $R_1$ die zuvor angegebenen Bedeutungen und Bevorzugungen.

Bedeutet R -NH-Acyl, so kann es sich bei dem Acylrest z.B. um einen $C_2$-$C_6$-Alkanoyl- oder Benzoylrest handeln. Beispiele für geeignete $C_2$-$C_6$-Alkanoylreste sind Acetyl, Propionyl, Butyryl, Isobutyryl, Valeryl, Isovaleryl oder Pivaloyl.

Das Benzoyl kann gegebenenfalls in der zuvor für Phenyl beschriebenen Weise weitersubstituiert sein.

Vorzugsweise handelt es sich bei R als -NH-Acyl um -NH-$C_1$-$C_4$-Alkanoyl oder um -NH-Benzoyl, welches unsubstituiert oder mit 1 bis 3 $C_1$-$C_4$-Alkyl, Chlor- oder Methoxygruppen substituiert ist.

Bedeutet R Phenoxy, so kann dieses unsubstituiert oder in der zuvor für Phenyl beschriebenen Weise weitersubstituiert sein; vorzugsweise ist das Phenoxy hierbei nicht weitersubstituiert.

R steht vorzugsweise für Wasserstoff, $C_1$-$C_4$-Alkoxy, Acylamino, $C_1$-$C_6$-Alkyl oder Sulfophenyl.

Besonders bevorzugte Bedeutungen von R sind Wasserstoff, $C_1$-$C_4$-Alkoxy oder $C_1$-$C_4$-Alkyl.

In einer besonders bevorzugten Ausführungsform der erfindungsgemässen Azofarbstoffe bedeutet R Wasserstoff oder Methyl.

Hat X die Bedeutung -$NR_1$-, so gelten für $R_1$ die zuvor geschilderten Bedeutungen und Bevorzugungen.

Vorzugsweise steht X für N und besonders bevorzugt für O.

Z hat bevorzugt die Bedeutung N.

Bei A als ankondensiertem aromatischem Rest kann es sich z.B. um einen Benzol-, Naphthalin-, Anthracen-, Phenanthren- oder Triphenylenrest handeln, der jeweils ausser mit $SO_3M$ und R mit den üblichen Substituenten weitersubstituiert sein kann.

Unter üblichen Substituenten sind in diesem Zusammenhang z.B. Halogen wie Fluor, Brom und insbesondere Chlor, Nitro, -CN, $C_1$-$C_4$-Alkoxy oder $C_1$-$C_4$-Alkyl zu verstehen.

Vorzugsweise steht A für einen gegebenenfalls weitersubstituierten Benzol- oder Naphthalinrest und insbesondere bevorzugt für einen Benzolrest, der keine Substituenten ausser -$SO_3M$ und R aufweist.

Bei A als ankondensiertem stickstoffhaltigem heterocyclischem Rest handelt es sich z.B. um einen

Chinolinrest und insbesondere um einen Pyridinrest. Stellt A einen Pyridinrest dar, so kann das N-Atom in jeder der vier denkbaren Positionen, $L_1$, $L_2$, $L_3$ oder $L_4$ im unten abgebildeten Strukturelement der erfindungsgemässen Azofarbstoffe

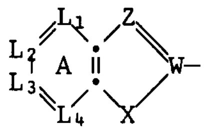

(5)

angeordnet sein, während die übrigen drei Positionen durch C-Atome besetzt sind und X, W und Z die zuvor angegebene Bedeutung haben. Vorzugsweise nimmt das N-Atom die Position $L_1$ im oben angegebenen Strukturelement ein.

A kann als heterocyclischer stickstoffhaltiger Rest und insbesondere als Pyridinrest durch die üblichen Substituenten wie z.B. Halogen, $C_1$-$C_4$-Alkyl oder $C_1$-$C_4$-Alkoxy weitersubstituiert sein, trägt jedoch vorzugsweise keine weiteren Substituenten ausser -$SO_3M$ und R.

In den bevorzugten Azofarbstoffen der Formel (1) hat A die Bedeutung eines gegebenenfalls weitersubstituierten Benzol- oder Pyridinrests. Besonders bevorzugt ist es hierbei, dass der Benzol- oder Pyridinrest nicht weitersubstituiert ist.

Insbesondere bevorzugt ist für A die Bedeutung eines nicht weitersubstituierten Benzolrests.

In einer bevorzugten Ausführungsform der erfindungsgemässen Azofarbstoffe ist A ein nicht weitersubstituierter Benzolrest, X O, Z -N= und R Wasserstoff.

Der 1,4-Phenylenrest B kann gegebenenfalls durch die üblichen Substituenten wie Sulfo, $C_1$-$C_4$-Alkyl, $C_1$-$C_4$-Alkoxy, Halogen wie Fluor, Chlor, Brom, Nitro oder -CN einfach oder mehrfach substituiert sein. Vorzugsweise handelt es sich bei B um einen unsubstituierten oder mit Chlor, Methyl oder insbesondere mit Sulfo substituiertem 1,4-Phenylenrest; besonders bevorzugt stellt B einen nicht weitersubstituierten 1,4-Phenylenrest dar.

Bei M in der Bedeutung eines protonierten $C_4$-$C_{12}$-Trialkylamins kann es sich z.B. um protoniertes N-Ethyldimethylamin, N,N-Diethylmethylamin, Tri-n-propylamin, Tri-n-butylamin, Tri-isobutylamin und insbesondere um Triethylamin oder Tri-isopropylamin handeln; geeignet sind auch Gemische verschiedener protonierter Amine.

Hat M die Bedeutung protoniertes $C_4$-$C_{12}$-Diamin, handelt es sich z.B. um ein Ethylendiamin oder 1,3-Diaminopropan, bei dem eines oder beide N-Atome zusätzlich mit einem oder zwei $C_1$-$C_4$-Alkylresten, vorzugsweise Methyl- oder Ethylresten, substituiert sind. M stellt hierbei bevorzugt ein N,N-Dialkylethylendiamin oder N,N-Dialkyl-1,3-diaminopropan dar. Beispiele sind: N-Ethylethylendiamin, N,N-Dimethylethylendiamin, N,N'-Dimethylethylendiamin, N,N-Diethylethylendiamin, 3-Dimethylamino-1-propylamin oder 3-Diethylamino-1-propylamin.

Steht M für ein protoniertes $C_2$-$C_{12}$-Alkanolamin, so kann es sich z.B. um die protonierte Form eines Monoalkanol-, Dialkanol-, Monoalkanoldialkyl, Dialkanolalkyl- oder Trialkanolamins oder um ein Gemisch verschiedener protonierter Alkanolamine handeln. Beispiele sind protoniertes 2-Aminoethanol, Di-(2-hydroxyethyl)-amin, N-(2-Hydroxyethyl)-dimethylamin, N-(2-Hydroxyethyl)-diethylamin, N,N,-Di-(2-hydroxyethyl)-methylamin, N,N-Di-(2-hydroxyethyl)-ethylamin oder Tri-(2-hydroxyethyl)-amin, 2-Aminoethoxyethanol oder Diethylaminopropylamin.

Vorzugsweise hat M die Bedeutung $Na^{\oplus}$, $Li^{\oplus}$ oder protoniertes $C_4$-$C_6$-Alkanolamin, wobei bei den $C_4$-$C_6$-Alkanolaminen Tri-(2-hydroxyethyl)-amin, Di-(2-hydroxyethyl)-amin oder ein Gemisch dieser beiden Amine bevorzugt ist.

Eine bevorzugte Ausführungsform der Erfindung betrifft Azofarbstoffe der Formel (1), worin R Wasserstoff, $C_1$-$C_4$-Alkyl oder $C_1$-$C_4$-Alkoxy bedeutet, X für O oder N steht, Z N ist, und K ein Rest der Formel (2) ist, wobei $R_1$ und $R_2$ unabhängig voneinander Wasserstoff oder $C_1$-$C_4$-Alkyl sind, $Y_1$ und $Y_2$ gleich sind und jeweils =O oder =NH bedeuten, $Y_3$ für =O, =NH oder =N-CN steht, M $H^{\oplus}$, $Na^{\oplus}$, $K^{\oplus}$, $NH_4^{\oplus}$ oder protoniertes $C_2$-$C_6$-Alkanolamin ist, A einen Benzolrest und B einen 1,4-Phenylenrest darstellt, der unsubstituiert oder mit Sulfo, Chlor, Methoxy oder Methyl substituiert ist.

In einer besonders bevorzugten Ausführungsform der Azofarbstoffe der Formel (1) ist R Wasserstoff, $C_1$-$C_4$-Akyl oder $C_1$-$C_4$-Alkoxy, X steht für O, Z ist N und K ist ein Rest der Formel (2), wobei $R_1$ und $R_2$ H sind, $Y_1$ und $Y_2$ jeweils =O bedeuten und $Y_3$ für =O oder =N-CN steht, M ist $Li^{\oplus}$, $Na^{\oplus}$ oder protoniertes $C_4$-$C_6$-Alkanolamin, A ist ein - Benzolrest und B ein nicht weitersubstituierter 1,4-Phenylenrest.

Insbesondere bevorzugt sind Azofarbstoffe der Formel

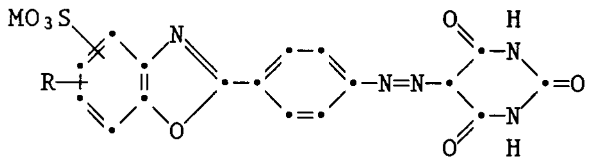

(6),

worin für M und R die zuvor angegebenen Bedeutungen und Bevorzugen gelten.

Die Herstellung der Azofarbstoffe der Formel (1) erfolgt in an sich bekannter Art und Weise, beispielsweise derart, dass man ein Amin der Formel

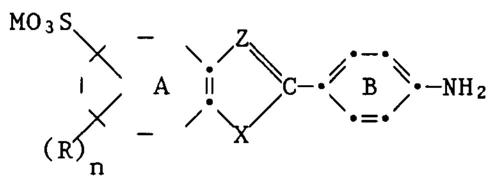

(7)

diazotiert und mit einer Kupplungskomponente HK umsetzt, wobei für die Symbole R, M, X, W, Z, A, B, K und n die zuvor angegebenen Bedeutungen und Bevorzugungen gelten.

Die Verbindungen der Formel (7) sind neu und stellen einen weiteren Gegenstand der vorliegenden Erfindung dar. Bevorzugt sind die Verbindungen der Formel

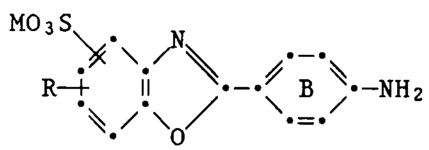

(8),

worin

- R Wasserstoff, $C_1$-$C_4$-Alkyl, $C_1$-$C_4$-Alkoxy, Halogen, Nitro, CN, -$NHR_1$, -NH-Acyl, Phenoxy, -COOH, -$CONHR_1$, oder gegebenenfalls substituiertes Phenyl, wobei $R_1$ Wasserstoff, gegebenenfalls substituiertes $C_1$-$C_6$-Alkyl oder gegebenenfalls substituiertes Phenyl bedeutet, und
- M $H^{\oplus}$, $Li^{\oplus}$, $Na^{\oplus}$, $K^{\oplus}$, $NH_4^{\oplus}$ oder die protonierte Form eines $C_4$-$C_{12}$-Trialkylamins, $C_4$-$C_{12}$-Diamins oder $C_2$-$C_{12}$-Alkanolamins bedeutet und der Ring
- B weitersubstituiert sein kann.

Die Verbindungen (7) und (8 werden analog zu an sich bekannten Herstellungsverfahren erhalten. Die Substituenten -$SO_3M$ und R sind dabei je nach Art und gewünschter Stellung im Molekül entweder schon im entsprechenden Ausgangsprodukt vorhanden oder werden erst nachträglich eingeführt.

Vorzugsweise erhält man die Verbindungen der Formel (7) durch Sulfonierung der entsprechenden Verbindungen der Formel

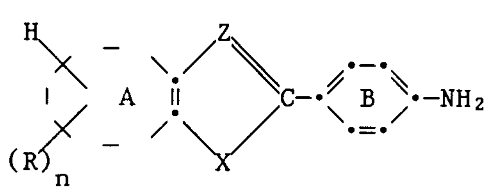

(10)

Die Sulfonierung erfolgt unter an sich bekannten Bedingungen, z.B. durch Behandeln in 10 bis 65%igem Oleum bei einer Temperataur zwischen etwa 0° und 80°C, vorzugsweise durch Behandeln in 15 bis 30%igem Oleum bei 15 bis 40°C.

Man kann die Verbindungen der Formel (7) aber auch erhalten, indem man bei der Synthese des heterocyclischen 5-Ringes, der die Gruppen Z und X aufweist, von einer Verbindung ausgeht, welche im Ring A bereits eine Sulfogruppe enthält.

Die Kupplungskomponenten HK sind bekannt oder können nach an sich bekannten Methoden hergestellt werden. Die Diazotierungs- und Kupplungsreaktion sind ebenfalls bekannt und erfolgen unter üblichen Bedingungen.

Das jeweils gewünschte Kation M wird in die erfindungsgemässen Azofarbstoffe der Formel (1) beispielsweise so eingeführt, dass man das z.B. durch Filtration und Auswaschen isolierte und gereinigte Diazoniumsalz des Amins der Formel (7) zu einem wässrigen Gemisch addiert, welches die Kupplungs-Komponente und ein basisches Lithium-, Natrium-, Kalium- oder Ammoniumsalz oder -hydroxid, ein $C_4$-$C_{12}$-Trialkylamin oder $C_2$-$C_{12}$-Alkanolamin oder Gemische verschiedener Alkylamine bzw. Alkanolamine enthält.

Verwendung finden die neuen Verbindungen der Formel (1) vor allem als Farbstoffe zum Färben und Bedrucken von Textilmaterialien, Papier, Leder und zur Bereitung von Tinten.

Dienen die erfindungsgemässen Azofarbstoffe zum Färben und Bedrucken von Textilmaterialien, so kommen solche aus z.B. Baumwolle, Wolle, Seide oder Polyamidmaterialien in Frage. Die neuen Farbstoffe haben ein gutes Ziehvermögen auf diese Textilmaterialien, einen guten Ausziehgrad und guten Aufbau und die erhaltenen Färbungen weisen gute Echtheiten, vor allem gute Nassechtheiten und Lichtechtheiten auf.

Die bevorzugte Verwendung der erfindungsgemässen Farbstoffe der Formel I liegt in der Anwendung zum Färben und Bedrucken von Papier aller Arten, vor allem von gebleichtem und geleimtem ligninfreiem Papier.

Die erfindungsgemässen Farbstoffe ziehen sehr gut auf diese Substrate, wobei das Abwasser- auch bei tiefen Nuancen (bis über 1/1 RT = Richttyptiefe) - praktisch farblos bleibt, was ein eminenter technischer und ökologischer Vorteil ist. Der gute Ausziehgrad ist auch für eine gute Reproduzierbarkeit der Nuance von Vorteil. Die Färbungen sind nassecht, d.h. sie zeigen keine Neigung zum Ausbluten, wenn gefärbtes Papier in nassem Zustand mit feuchtem weissem Papier in Berührung gebracht wird. Diese Eigenschaft ist besonders für sogenannte "Tissues" erwünscht, bei denen vorhersehbar ist, dass das gefärbte Papier in nassem Zustand (z.B. getränkt mit Wasser, Alkohol, Tensid-Lösung etc.) in Berührung mit anderen Flächen wie Textilien, Papier und dergleichen kommt, die gegen Verschmutzung geschützt werden müssen.

Die gelben bis grüngelben Ausfärbungen sind brillant und haben sehr gute Echtheiten, vor allem Lichtechtheit.

Weiter dienen die Farbstoffe der Formel I zum Färben von Ledermaterialien nach den verschiedensten Applikationsverfahren, wie Sprühen, Bürsten und Tauchen und zur Bereitung von Tinten aller Art wie für Kugelschreiber und Drucktinten.

In Indian J. Chem. 1974, 12(1), 48-50 sind Azofarbstoffe beschrieben, die als Diazokomponente Aminophenylnaphthoxazol und als Kupplungskomponente Phenole, Naphthole, Naphthylamine oder Aminonaphthole enthalten und somit sowohl bezüglich der Disazokomponente als auch bezüglich der Kupplungskomponente von den erfindungsgemässen Farbstoffen verschieden sind.

Die folgenden Beispiele veranschaulichen die Erfindung, ohne sie darauf zu limitieren. Die Temperaturen sind in Grad Celsius angegeben, Teile (T) bedeuten Gewichtsteile und %-Angaben sind Gewichtsprozente.

Beispiel 1:

a) 137 Teile 4-Aminobenzoesäure und 110 Teile 2-Aminophenol werden in 2000 Teile Polyphosphorsäure eingetragen und 30 Minuten bei 200 °C gehalten. Das Reaktionsgemisch wird danach auf Eis gegossen, wobei das Amin der Formel

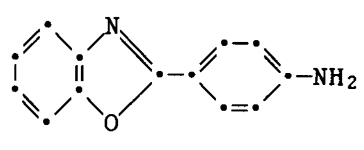

ausfällt. Das Produkt wird abgesaugt, mit Wasser gewaschen und getrocknet.

b) 105 Teile des gemäss a) erhaltenen Produkts werden in 625 Teilen Schwefelsäuremonohydrat gelöst und mit 230 Teilen 65%igem Oleum versetzt. Man rührt 15 Stunden bei Raumtemperatur und giesst dann auf Eis. Das ausgefallene Reaktionsprodukt der Formel

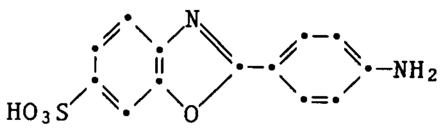

wird abgesaugt, mit Wasser gewaschen und getrocknet.

c) 9,0 Teile der unter b) erhaltenen 2-(4-Aminophenyl)-benzoxazol-6-sulfonsäure werden in 200 Teilen Wasser mit etwas wässriger Natriumhydroxidlösung gelöst und mit 8 Teilen 4 n Natriumnitritlösung versetzt. Diese Lösung wird mit 8 Teilen konzentrierter Salzsäure bei 0 bis 5 °C diazotiert. Die Suspension der Diazoverbindung wird dann zu einem Gemisch bestehend aus 4 Teilen Barbitursäure, 8 Teilen 30%iger Natriumhydroxidlösung und 100 Teilen Wasser zugetropft.

Der Farbstoff der Formel

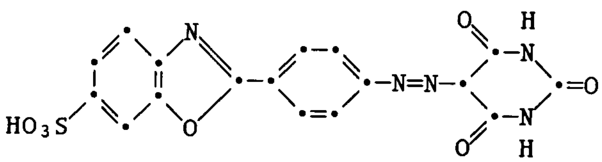

wird mit 20 Teilen Natriumchlorid ausgesalzen, abgenutscht und getrocknet; er ist sehr gut in Wasser löslich und färbt Papier in brillanten grünstichig gelben Nuancen von sehr guten Echtheiten (insbesondere Lichtechtheit) und zeigt einen ausgezeichneten Aufbau.

Beispiele 2-72

Verfährt man wie im Beispiel 1c) angegeben, verwendet jedoch die in der folgenden Tabelle unter (A) aufgeführten Diazokomponenten und die unter (B) genannten Kupplungskomponenten, so erhält man Azofarbstoffe, die Papier in den in der letzen Spalte verzeichneten Nuancen mit guten Echtheiten färben.

| Beispiel Nr. | A | B | Nuance auf Papier |
|---|---|---|---|
| 2 | 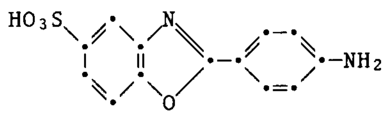 | 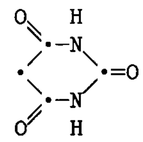 | grüngelb |
| 3 | 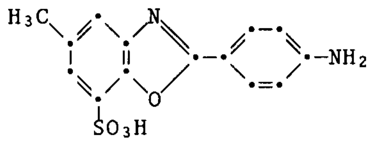 | dito | grüngelb |
| 4 | 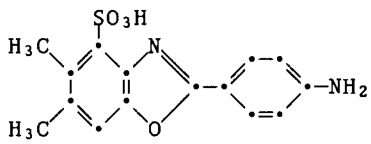 | dito | gelb |
| 5 | 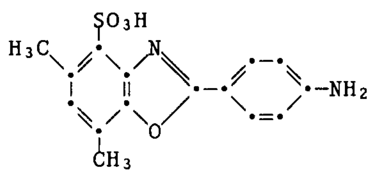 | dito | grüngelb |
| 6 | 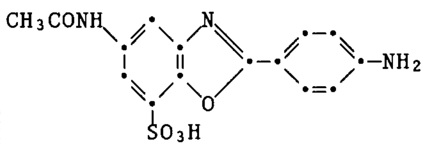 | dito | gelb |
| 7 | 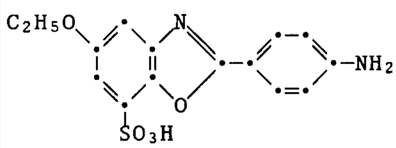 | dito | gelb |
| 8 | 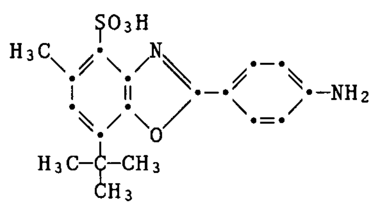 | dito | grüngelb |

| Beispiel Nr. | A | B | Nuance auf Papier |
|---|---|---|---|
| 9 | 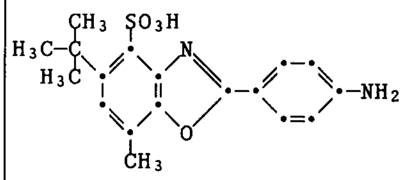 | 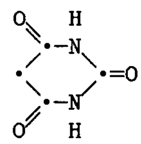 | grüngelb |
| 10 | 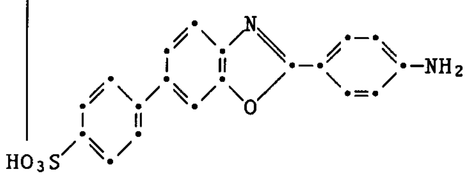 | dito | gelb |
| 11 | 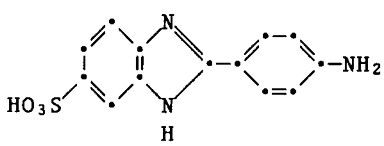 | dito | gelb |
| 12 | 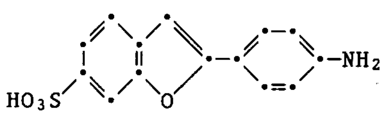 | dito | orange |
| 13 | 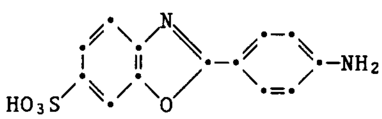 | 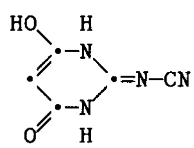 | grüngelb |
| 14 | 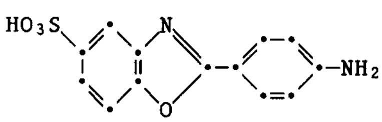 | dito | grüngelb |

| Bei- spiel Nr. | A | B | Nuance auf Papier |
|---|---|---|---|
| 15 | 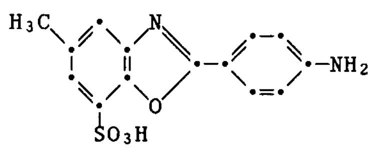 | 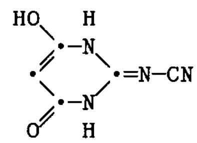 | grüngelb |
| 16 | 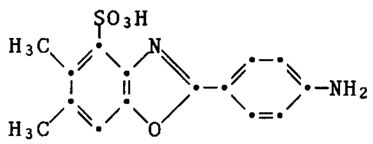 | dito | gelb |
| 17 | 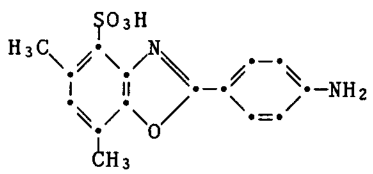 | dito | gelb |
| 18 | 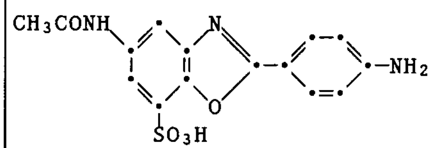 | dito | gelb |
| 19 | 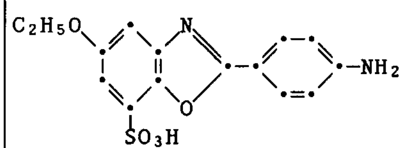 | dito | gelb |
| 20 | 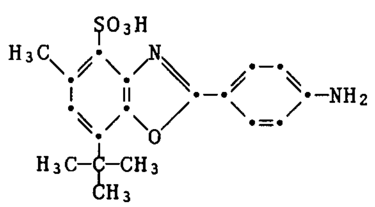 | dito | gelb |
| 21 | 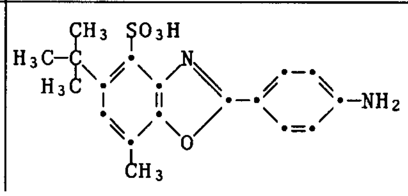 | dito | gelb |

| Beispiel Nr. | A | B | Nuance auf Papier |
|---|---|---|---|
| 22 | 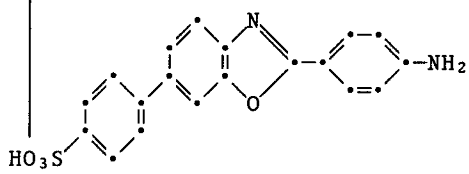 | 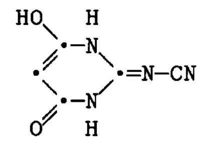 | gelb |
| 23 | 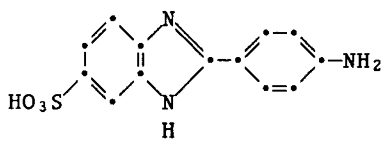 | dito | gelb |
| 24 | 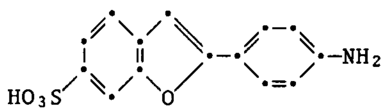 | dito | orange |
| 25 | 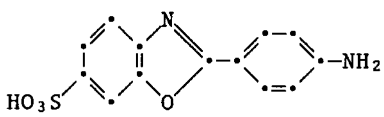 | 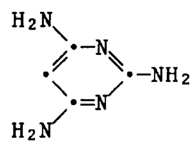 | gelb |
| 26 | 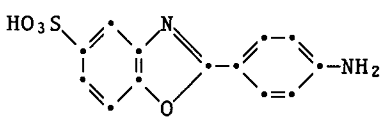 | dito | gelb |
| 27 | 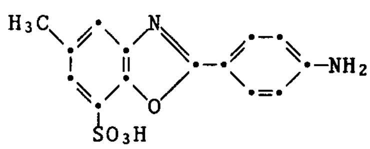 | dito | gelb |

| Beispiel Nr. | A | B | Nuance auf Papier |
|---|---|---|---|
| 28 | 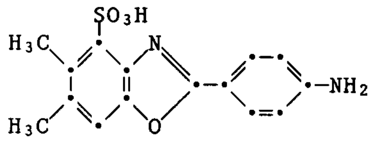 | 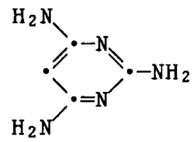 | gelb |
| 29 | 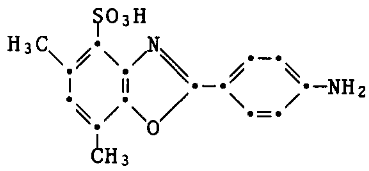 | dito | gelb |
| 30 | 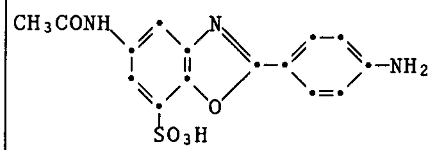 | dito | gelb |
| 31 | 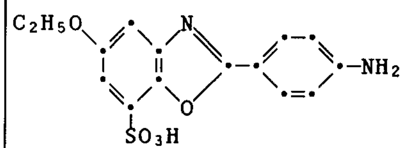 | dito | gelb |
| 32 | 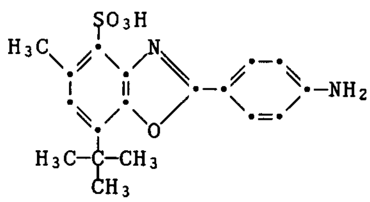 | dito | gelb |
| 33 | 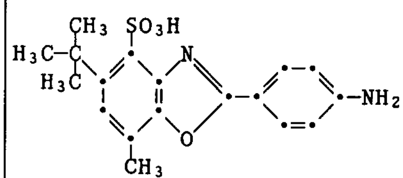 | dito | gelb |
| 34 | 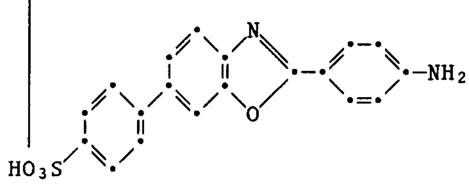 | dito | gelb |

| Beispiel Nr. | A | B | Nuance auf Papier |
|---|---|---|---|
| 35 | 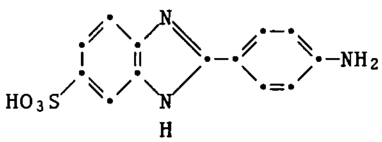 | 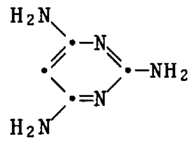 | gelb |
| 36 | 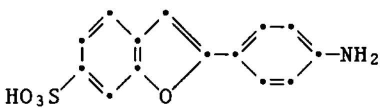 | dito | orange |
| 37 | 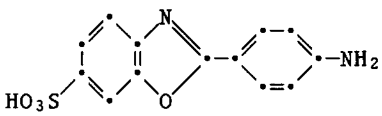 | 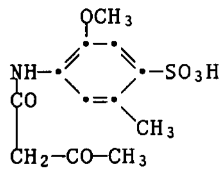 | grüngelb |
| 38 | 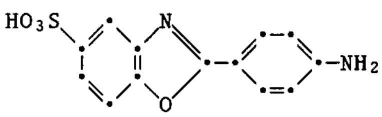 | dito | grüngelb |
| 39 | 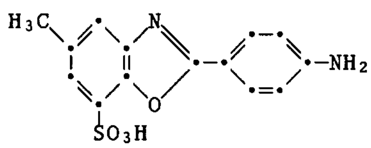 | dito | grüngelb |
| 40 | 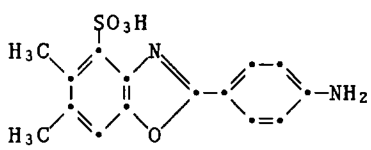 | dito | grüngelb |

| Beispiel Nr. | A | B | Nuance auf Papier |
|---|---|---|---|
| 41 | 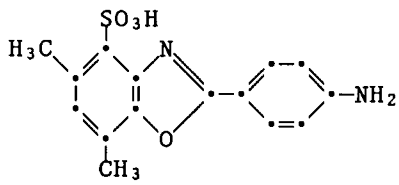 | 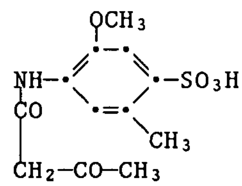 | grüngelb |
| 42 | 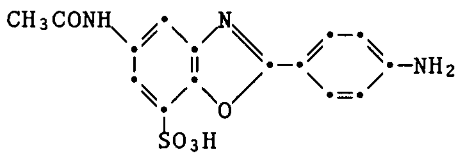 | dito | grüngelb |
| 43 | 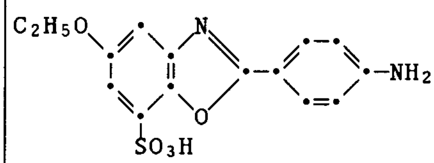 | dito | grüngelb |
| 44 | 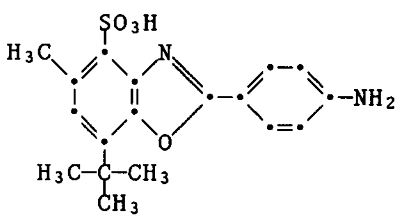 | dito | grüngelb |
| 45 | 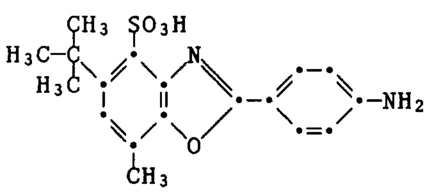 | dito | grüngelb |
| 46 | 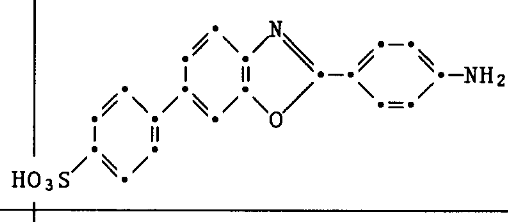 | dito | grüngelb |
| 47 | 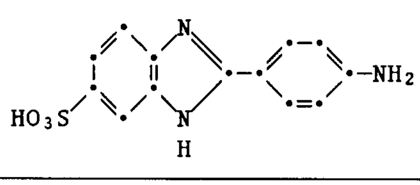 | dito | grüngelb |

| Beispiel Nr. | A | B | Nuance auf Papier |
|---|---|---|---|
| 48 | 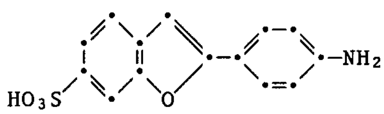 | dito | grüngelb |
| 49 | 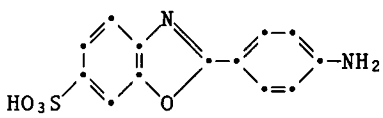 | 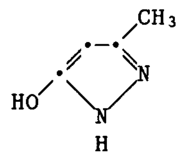 | rotst. gelb |
| 50 | 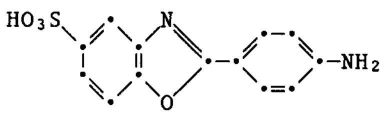 | dito | rotst. gelb |
| 51 | 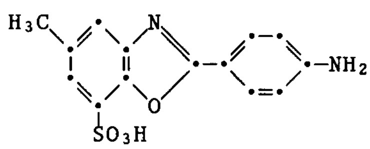 | dito | rotst. gelb |
| 52 | 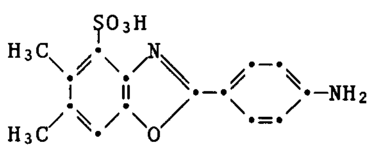 | dito | rotst. gelb |
| 53 | 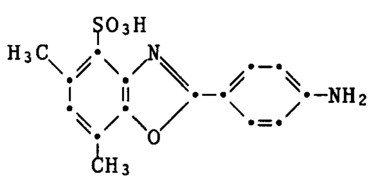 | dito | rotst. gelb |

| Beispiel Nr. | A | B | Nuance auf Papier |
|---|---|---|---|
| 54 | 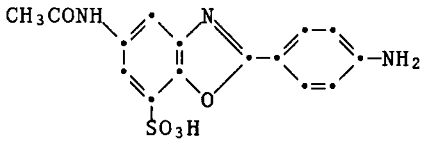 | 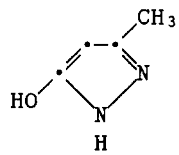 | rotst. gelb |
| 55 | 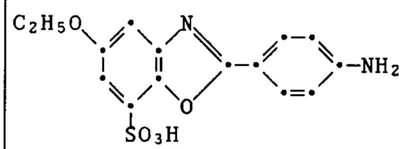 | dito | rotst. gelb |
| 56 | 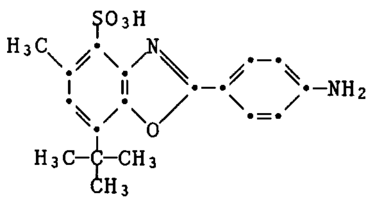 | dito | rotst. gelb |
| 57 | 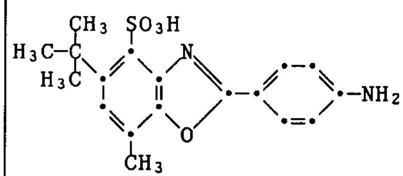 | dito | rotst. gelb |
| 58 | 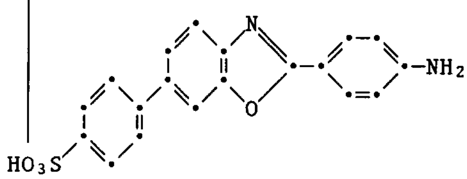 | dito | rotst. gelb |
| 59 | 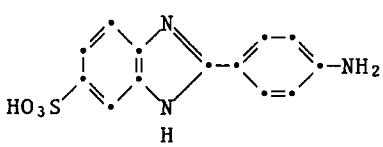 | dito | rotst. gelb |

| Beispiel Nr. | A | B | Nuance auf Papier |
|---|---|---|---|
| 60 | 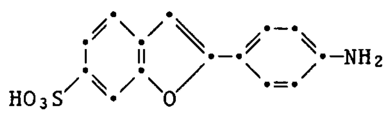 | 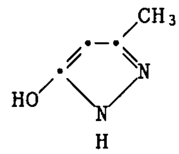 | orange |
| 61 | 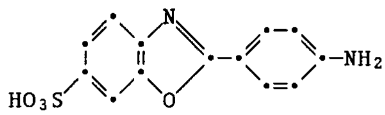 | 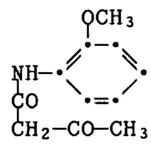 | grüngelb |
| 62 | 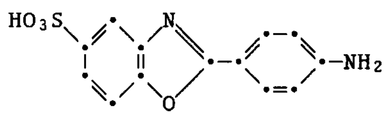 | dito | grüngelb |
| 63 | 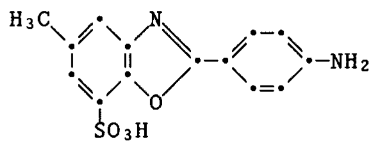 | dito | grüngelb |
| 64 | 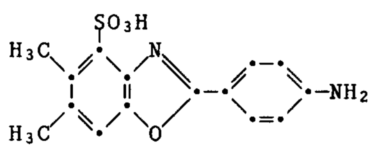 | dito | grüngelb |
| 65 | 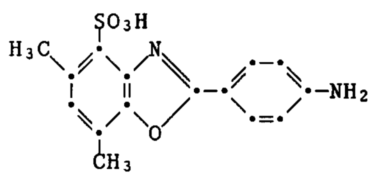 | dito | grüngelb |
| 66 | 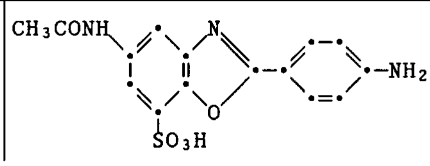 | dito | grüngelb |

| Beispiel Nr. | A | B | Nuance auf Papier |
|---|---|---|---|
| 67 | 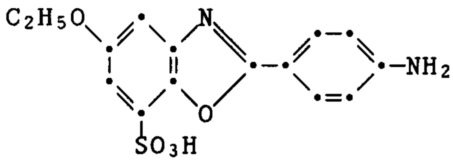 | 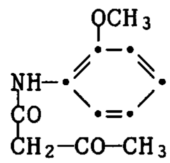 | grüngelb |
| 68 | 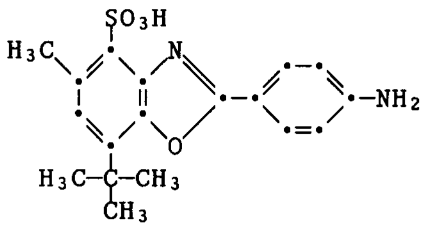 | dito | grüngelb |
| 69 | 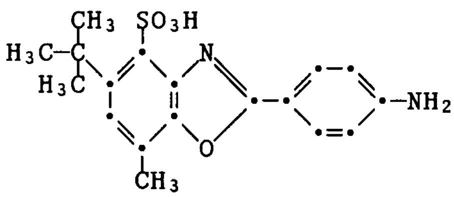 | dito | grüngelb |
| 70 | 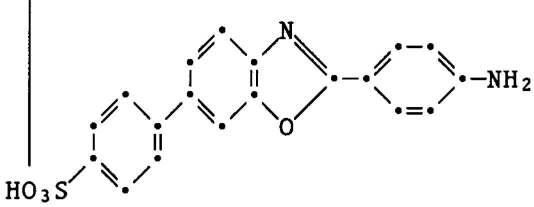 | dito | grüngelb |
| 71 | 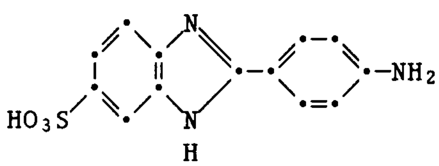 | dito | grüngelb |
| 72 | 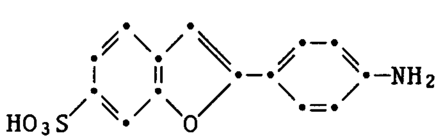 | dito | grüngelb |

Beispiel 73: Die im Beispiel 4 verwendete Diazokomponente erhält man, indem man wie im Beispiel 1a) arbeitet, jedoch anstelle von 110 Teilen 2-Aminophenol eine äquivalente Menge an 2-Aminophenol-4-sulfonsäure einsetzt.

Die in den Beispielen 3 bis 13 verwendeten Diazokomponenten wurden jeweils durch Sulfonierung der entsprechenden Amine unter den im Beispiel 1b) angegebenen Bedingungen erhalten.

Die von Sulfogruppen freien Amine für die Diazokomponenten der Beispiele 3 bis 12 sind auf analoge Art und Weise wie im Beispiel 1a) beschrieben erhältlich.

Die im Beispiel 13 verwendete Diazokomponente ist durch Sulfonierung des entsprechenden Amins unter den im Beispiel 1b) angegebenen Bedingungen erhältlich, das Amin durch Reduktion der entsprechenden Nitroverbindung unter üblichen Bedingungen.

Die Nitroverbindung wurde durch die bekannte Umsetzung von o-Hydroxybenzaldehyd mit 4-Nitrobenzylbromid hergestellt.

Beispiel 74: Durch Auflösen von 1,0 g der Farbstoffverbindung von Beispiel 1 in 500 ml Wasser wird eine Farbstoffstammlösung bereitet. Dann werden 10 ml dieser Lösung zu einer Suspension von 4,0 g (Trockengewicht) gebleichten Sulfitfasern in 300 ml Wasser gegeben, und die Stoffsuspension wird hierauf bei Raumtemperatur 10 Minuten lang gerührt. Dann wird das Leimungsmittel zugegeben, das aus 1,5 ml 4-prozentiger Baumharzlösung und 3 ml 4-prozentiger Aluminiumsulfatlösung besteht. Der pH-Wert des Färbebads beträgt zu diesem Zeitpunkt etwa 4,5. Das Rühren wird 15 Minuten fortgesetzt, bevor die gefärbte Masse auf einem Sieb filtriert wird. Das Papier ist in einer sehr intensiven, brillanten, lichtechten gelben Nuance gefärbt. Der Ausziehgrad ist >90 %.

## Patentansprüche

**1.** Azofarbstoffe der Formel

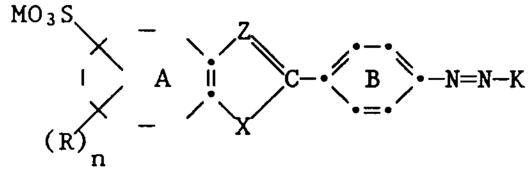

(1)

oder deren tautomere Formen, worin bedeuten:

Z  N oder CH,

X  O, $NR_1$ oder N,

K  eine Verbindung der Formel

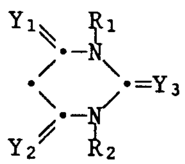

(2)

worin

$Y_1$ und $Y_2$ unabhängig voneinander =O, =NH oder =N-$C_1$-$C_6$-Alkyl,

$Y_3$ =O, =S, =$NR_1$ oder =N-CN und

$R_1$ und $R_2$ unabhängig voneinander Wasserstoff, gegebenenfalls substituiertes $C_1$-$C_6$-Alkyl oder gegebenenfalls substituiertes Phenyl

bedeuten oder der Formel

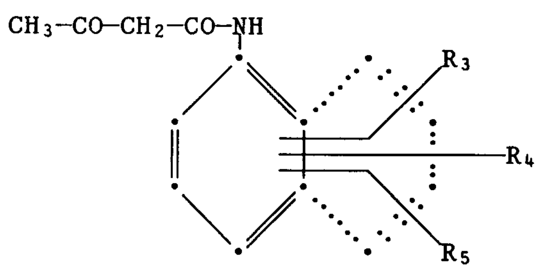

(3)

worin $R_3$, $R_4$ und $R_5$ jeweils unabhängig voneinander Wasserstoff, $C_1$-$C_4$-Alkyl, $C_1$-$C_4$-Alkoxy, Chlor, Brom, Nitro oder Sulfo bedeuten oder der Formel

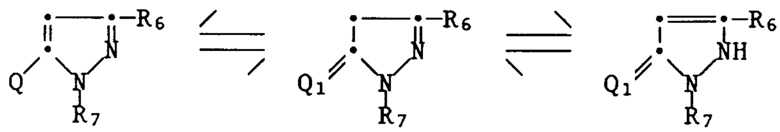

(4),

worin Q OH oder $NH_2$, $Q_1$ O oder NH, $R_7$ H, $C_1$-$C_4$-Alkyl, Alkenyl, Cycloalkyl, Aryl, vor allem Phenyl, Benzyl oder Phenylethyl und $R_6$ gleich $R_7$ oder $COOR_7$ oder $CONHR_7$ ist,

- R Wasserstoff, $C_1$-$C_6$-Alkyl, $C_1$-$C_4$-Alkoxy, Halogen, Nitro, -CN, -$NHR_1$, -NH-Acyl, Phenoxy, -COOH, $COOR_1$, -$CONHR_1$ oder gegebenenfalls substituiertes Phenyl, wobei $R_1$ Wasserstoff, gegebenenfalls substituiertes $C_1$-$C_6$-Alkyl oder gegebenenfalls substituiertes Phenyl bedeutet,
- M $H^{\oplus}$, $Li^{\oplus}$, $Na^{\oplus}$, $K^{\oplus}$, $NH_4^{\oplus}$ oder die protonierte Form eines $C_4$-$C_{12}$-Trialkylamins, $C_4$-$C_{12}$-Diamins oder $C_2$-$C_{12}$-Alkanolamins,
- A einen Benzol- oder Pyridinrest, der gegebenenfalls weitersubstituiert ist, und
- B einen gegebenenfalls weitersubstituierten 1,4-Phenylenrest und
- n 1, 2 oder 3.

**2.** Azofarbstoffe gemäss Anspruch 1, dadurch gekennzeichnet, dass K eine Kupplungskomponente der Formel (2) bedeutet, worin $R_1$ und $R_2$ unabhängig voneinander für Wasserstoff oder $C_1$-$C_4$-Alkyl stehen.

**3.** Azofarbstoffe gemäss Anspruch 2, dadurch gekennzeichnet, dass K eine Kupplungskomponente der Formel (2) bedeutet, worin $Y_1$ und $Y_2$ gleich sind und jeweils =O oder =NH bedeuten.

**4.** Azofarbstoffe gemäss Anspruch 2, dadurch gekennzeichnet, dass K eine Kupplungskomponente der Formel (2) bedeutet, worin $Y_3$ =O, =NH oder =N-CN bedeutet.

**5.** Azofarbstoffe gemäss Anspruch 2, dadurch gekennzeichnet, dass K eine Kupplungskomponente der Formel (2) bedeutet, worin $Y_1$, $Y_2$ und $Y_3$ jeweils =O sind.

**6.** Azofarbstoffe gemäss einem der Ansprüche 1 bis 5, dadurch gekennzeichnet, dass R Wasserstoff, $C_1$-$C_6$-Alkyl, $C_1$-$C_4$-Alkoxy, NH-Acyl oder Sulfophenyl ist.

**7.** Azofarbstoffe gemäss Anspruch 6, dadurch gekennzeichnet, dass R Wasserstoff, $C_1$-$C_4$-Alkoxy oder $C_1$-$C_4$-Alkyl ist.

**8.** Azofarbstoffe gemäss Anspruch 7, dadurch gekennzeichnet, dass R Wasserstoff, Methoxy oder Methyl ist.

**9.** Azofarbstoffe gemäss einem der Ansprüche 1 bis 8, dadurch gekennzeichnet, dass X für O oder N steht.

**10.** Azofarbstoffe gemäss einem der Ansprüche 1 bis 9, dadurch gekennzeichnet, dass Z N ist.

**11.** Azofarbstoffe gemäss einem der Ansprüche 1-10, dadurch gekennzeichnet, dass A für einen Benzolrest oder Pyridinrest steht, der nicht weitersubstituiert ist.

**12.** Azofarbstoffe gemäss einem der Ansprüche 1 bis 11, dadurch gekennzeichnet, dass A ein nicht weitersubstituierter Benzolrest ist, und X O, Z N und R Wasserstoff bedeutet.

**13.** Azofarbstoffe gemäss einem der Ansprüche 1 bis 12, dadurch gekennzeichnet, dass der 1,4-Phenylrest B nicht weitersubstituiert ist.

**14.** Azofarbstoffe der Formel (1) gemäss Anspruch 1, worin R Wasserstoff, $C_1$-$C_4$-Alkyl oder $C_1$-$C_4$-Alkoxy bedeutet, X für O oder N steht, Z N ist, und K ein Rest der Formel (2) ist, wobei $R_1$ und $R_2$ unabhängig voneinander Wasserstoff oder $C_1$-$C_4$-Alkyl sind, $Y_1$ und $Y_2$ gleich sind und jeweils =O oder =NH bedeuten, $Y_3$ für =O, =NH oder =N-CN steht, M $H^{\oplus}$, $Na^{\oplus}$, $K^{\oplus}$, $NH_4^{\oplus}$ oder protoniertes $C_2$-$C_6$-Alkanolamin ist, A einen Benzolrest und B einen 1,4-Phenylenrest darstellt, der unsubstituiert oder mit

Sulfo, Chlor, Methoxy oder Methyl substituiert ist.

**15.** Azofarbstoffe gemäss Anspruch 14, worin R Wasserstoff, $C_1$-$C_4$-Alkyl oder -Alkoxy ist, X für O und Z für N steht, K ein Rest der Formel (2) ist, wobei $R_1$ und $R_2$ H sind, $Y_1$ und $Y_2$ jeweils =O bedeuten und $Y_3$ für =O oder =N-CN steht, M $Li^⊕$, $Na^⊕$ oder protoniertes $C_4$-$C_6$-Alkanolamin ist, A ein nicht weitersubstituierter Benzolrest und B ein nicht weitersubstituierter 1,4-Phenylenrest ist.

**16.** Azofarbstoffe gemäss Anspruch 1 der Formel

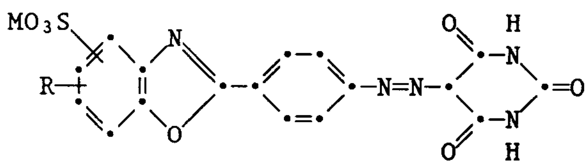

(6),

worin M und R die im Anspruch 1 angegebene Bedeutung haben.

**17.** Verfahren zur Herstellung von Verbindungen der Formel (1) gemäss Anspruch 1, dadurch gekennzeichnet, dass man ein Amin der Formel

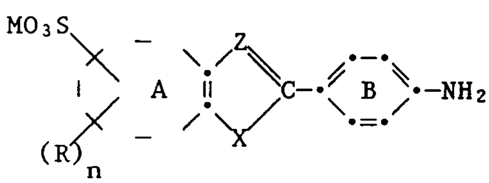

(7)

diazotiert und mit einer Kupplungskomponente der Formel (2), (3) oder (4) umsetzt, wobei die Symbole R, M, X, Z, A, B, $Y_1$, $Y_2$, $Y_3$, $R_1$ bis $R_7$, Q, $Q_1$ und n die im Anspruch 1 angegebene Bedeutung haben.

**18.** Verbindungen der Formel

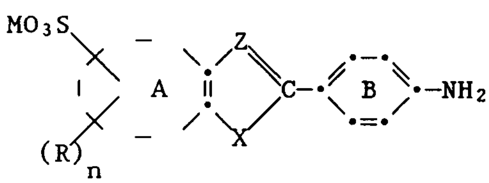

(7)

worin R, M, X, Z, A, B und n die im Anspruch 1 angegebene Bedeutung aufweisen.

**19.** Verbindungen der Formel

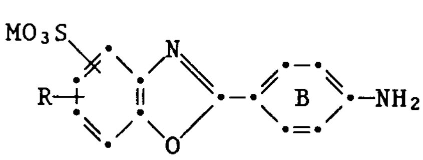

(8),

worin

R Wasserstoff, $C_1$-$C_4$-Alkyl, $C_1$-$C_4$-Alkoxy, Halogen, Nitro, CN, -$NHR_1$, -NH- Acyl, Phenoxy, -COOH, -$CONHR_1$, oder gegebenenfalls substituiertes Phenyl, wobei $R_1$ Wasserstoff, gegebenenfalls substituiertes $C_1$-$C_6$-Alkyl oder gegebenenfalls substituiertes Phenyl bedeutet, und

M $H^⊕$, $Li^⊕$, $Na^⊕$, $K^⊕$, $NH_4^⊕$ oder die protonierte Form eines $C_4$-$C_{12}$-Trialkylamins, $C_4$-$C_{12}$-Diamins

oder $C_2$-$C_{12}$-Alkanolamins bedeutet und der Ring
B weitersubstituiert sein kann.

**20.** Verwendung der Verbindungen der Formel (1) gemäss Anspruch 1 als Farbstoffe zum Färben und Bedrucken von Textilmaterialien, Papier, Leder und zur Bereitung von Tinten.

**21.** Verwendung gemäss Anspruch 20 zum Färben und Bedrucken von Papier aller Arten.

**22.** Das mit Farbstoffen der Formel (1) gemäss Anspruch 1 gefärbte Papier.

## Claims

**1.** An azo dye of the formula

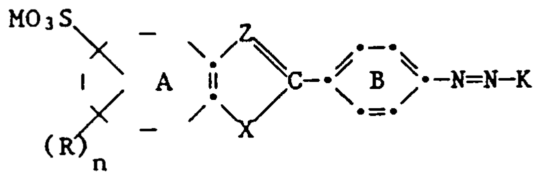

(1)

or tautomeric forms thereof, in which:

Z is N or CH,
X is O, $NR_1$ or N,
K is a compound of the formula

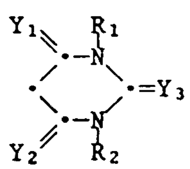

(2)

in which

$Y_1$ and $Y_2$ are independently of each other =O, =NH or =N-$C_1$-$C_6$alkyl,
$Y_3$ is =O, =S, =$NR_1$ or =N-CN and
$R_1$ and $R_2$ are independently of each other hydrogen, substituted or unsubstituted $C_1$-$C_6$alkyl or substituted or unsubstituted phenyl

or of the formula

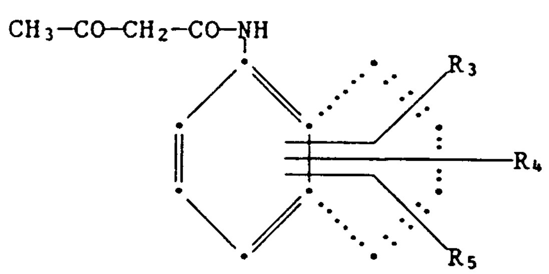

(3)

in which $R_3$, $R_4$ and $R_5$ are each independently of one another hydrogen, $C_1$-$C_4$alkyl, $C_1$-$C_4$alkoxy, chlorine, bromine, nitro or sulfo or of the formula

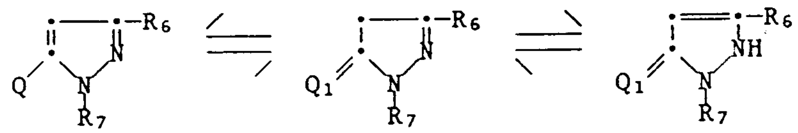

(4),

in which Q is OH or $NH_2$, $Q_1$ is O or NH, $R_7$ is H, $C_1$-$C_4$alkyl, alkenyl, cycloalkyl, aryl, in particular phenyl, benzyl or phenylethyl and $R_6$ is $R_7$ or $COOR_7$ or $CONHR_7$,

R is hydrogen, $C_1$-$C_6$alkyl, $C_1$-$C_4$alkoxy, halogen, nitro, -CN, $-NHR_1$, -NH-acyl, phenoxy, -COOH, $COOR_1$, $-CONHR_1$ or substituted or unsubstituted phenyl, $R_1$ being hydrogen, substituted or unsubstituted $C_1$-$C_6$alkyl or substituted or unsubstituted phenyl.

M is $H^{\oplus}$, $Li^{\oplus}$, $Na^{\oplus}$, $K^{\oplus}$, $NH_4^{\oplus}$ or the protonated form of a $C_4$-$C_{12}$trialkylamine, of a $C_4$-$C_{12}$diamine or of a $C_2$-$C_{12}$alkanolamine,

A is a benzene or pyridine radical which can be further substituted, and

B is a 1,4-phenylene radical which can be further substituted, and

n is 1, 2 or 3.

**2.** An azo dye according to claim 1, wherein K is a coupling component of the formula (2) in which $R_1$ and $R_2$ are independently of each other hydrogen or $C_1$-$C_4$alkyl.

**3.** An azo dye according to claim 2, wherein K is a coupling component of the formula (2) in which $Y_1$ and $Y_2$ are identical and are each =O or =NH.

**4.** An azo dye according to claim 2, wherein K is a coupling component of the formula (2), in which $Y_3$ is =O, =NH or =N-CN.

**5.** An azo dye according to claim 2, wherein K is a coupling component of the formula (2), in which $Y_1$, $Y_2$ and $Y_3$ are each =O.

**6.** An azo dye according to any one of claims 1 to 5, wherein R is hydrogen, $C_1$-$C_6$alkyl, $C_1$-$C_4$alkoxy, NH-acyl or sulfophenyl.

**7.** An azo dye according to claim 6, wherein R is hydrogen, $C_1$-$C_4$alkoxy or $C_1$-$C_4$alkyl.

**8.** An azo dye according to claim 7, wherein R is hydrogen, methoxy or methyl.

**9.** An azo dye according to one of claims 1 to 8, wherein X is O or N.

**10.** An azo dye according to any one of claims 1 to 9, wherein Z is N.

**11.** An azo dye according to any one of claims 1 to 10, wherein A is a benzene radical or pyridine radical which is not further substituted.

**12.** An azo dye according to any one of claims 1 to 11, wherein A is a benzene radical which is not further substituted, X is O, Z is N and R is hydrogen.

**13.** An azo dye according to any one of claims 1 to 12, wherein the 1,4-phenylene radical B is not further substituted.

**14.** An azo dye of the formula (1) according to claim 1, in which R is hydrogen, $C_1$-$C_4$alkyl or $C_1$-$C_4$alkoxy, X is O or N, Z is N, and K is a radical of the formula (2) where $R_1$ and $R_2$ are independently of each other hydrogen or $C_1$-$C_4$alkyl, $Y_1$ and $Y_2$ are identical and are each =O or =NH, $Y_3$ is =O, =NH or =N-CN, M is $H^{\oplus}$, $Na^{\oplus}$, $K^{\oplus}$, $NH_4^{\oplus}$ or protonated $C_2$-$C_6$alkanolamine, A is a benzene radical and B is a 1,4-phenylene radical which is unsubstituted or substituted by sulfo, chlorine, methoxy or methyl.

**15.** An azo dye according to claim 14, in which R is hydrogen, $C_1$-$C_4$alkyl or $C_1$-$C_4$alkoxy, X is O, Z is N and K is a radical of the formula (2) where $R_1$ and $R_2$ are H, $Y_1$ and $Y_2$ are each =O and $Y_3$ is =O or =N-CN, M is $Li^{\oplus}$, $Na^{\oplus}$ or protonated $C_4$-$C_6$alkanolamine, A is a benzene radical and B is a 1,4-phenylene radical which are not further substituted.

**16.** An azo dye according to claim 1 of the formula

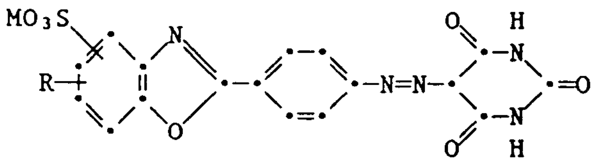

(6),

in which M and R are as defined in claim 1.

**17.** A process for preparing a compound of the formula (1), according to claim 1, which comprises diazotizing an amine of the formula

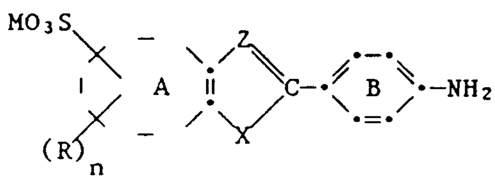

(7)

and reacting with a coupling component of the formula (2), (3) or (4), the symbols R, M, X, Z, A, B, $Y_1$, $Y_2$, $Y_3$, $R_1$, to $R_7$, Y, Q, $Q_1$ and n being as defined in claim 1.

**18.** A compound of the formula

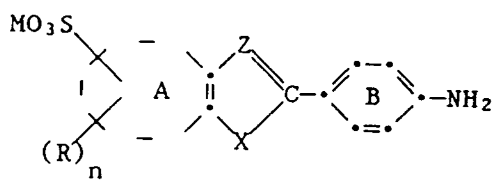

(7)

in which R, M, X, Z, A, B and n are as defined in claim 1.

**19.** A compound of the formula

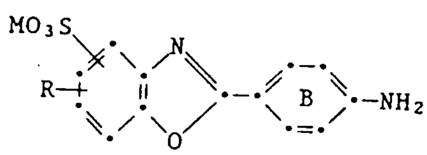

(8)

in which

R is hydrogen, $C_1$-$C_4$alkyl, $C_1$-$C_4$alkoxy, halogen, nitro, CN, -$NHR_1$, -NH-acyl, phenoxy, -COOH, -$CONHR_1$, or substituted or unsubstituted phenyl and $R_1$ is hydrogen, substituted or unsubstituted $C_1$-$C_6$alkyl or substituted or unsubstituted phenyl, and M is $H^{\oplus}$, $Li^{\oplus}$, $Na^{\oplus}$, $K^{\oplus}$, $NH_4^{\oplus}$ or the protonated form of a $C_4$-$C_{12}$trialkylamine, of a $C_4$-$C_{12}$diamine or of a $C_2$-$C_{12}$alkanolamine and the ring B can be further substituted.

**20.** Use of the compounds of the formula (1) according to claim 1, as dyes for dyeing and printing textile materials, paper, leather and for preparing inks.

**21.** Use according to claim 20, for dyeing and printing paper of any kind.

**22.** The paper dyed with a dye of formula (1) according to claim 1.

## Revendications

**1.** Colorants azoïques de formule :

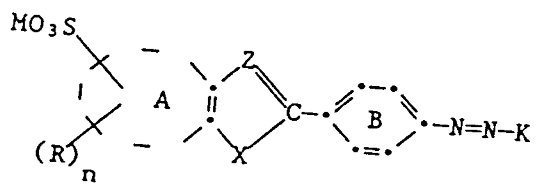

(1)

ou leurs formes tautomères, formule dans laquelle Z représente un atome d'azote ou un groupe CH, X représente un atome d'oxygène ou d'azote ou un groupe $NR_1$, K représente le radical d'un composé de formule :

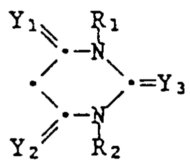

(2)

dans laquelle $Y_1$ et $Y_2$ représentent chacun, indépendamment l'un de l'autre, un groupe =O, =NH ou =N-alkyle($C_1$ à $c_6$), $Y_3$ représente un groupe =O, =S, =$NR_1$ ou =N-CN, et $R_1$ et $R_2$ représentent chacun, indépendamment l'un de l'autre, un atome d'hydrogène, un groupe alkyle en $C_1$ à $C_6$ éventuellement substitué ou un groupe phényle éventuellement substitué, ou de formule :

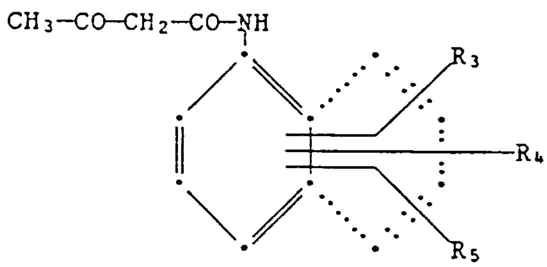

(3)

dans laquelle $R_3$, $R_4$ et $R_5$ représentent chacun, indépendamment l'un de l'autre, un atome d'hydrogène, de chlore ou de brome, ou un groupe alkyle en $C_1$ à $C_4$, alcoxy en $C_1$ à $C_4$, nitro ou sulfo,
ou de formule :

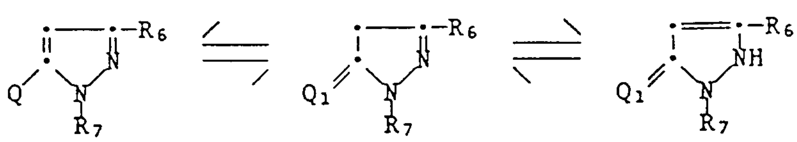

(4)

dans laquelle Q représente un groupe OH ou $NH_2$, $Q_1$ représente un atome d'oxygène ou un groupe NH, $R_7$ représente un atome d'hydrogène ou un groupe alkyle en $C_1$ à $C_4$, alcényle, cycloalkyle, aryle, surtout phényle, benzyle ou phényléthyle, et $R_6$ est identique à $R_7$ ou représente un groupe $COOR_7$ ou $CONHR_7$,
R représente un atome d'hydrogène ou d'halogène, ou un groupe alkyle en $C_1$ à $C_6$, alcoxy en $C_1$ à

$C_4$, nitro, -CN, -$NHR_1$, -NH-acyle, phénoxy, -COOH, -$COOR_1$, -$CONHR_1$ ou phényle éventuellement substitué, $R_1$ représentant un atome d'hydrogène, un groupe alkyle en $C_1$ à $C_6$ éventuellement substitué ou un groupe phényle éventuellement substitué,
M représente un cation $H^+$, $Li^+$, $Na^+$, $K^+$ ou $NH_4^+$, ou la forme protonée d'une trialkylamine en $C_4$ à $C_{12}$, d'une diamine en $C_4$ à $C_{12}$ ou d'une alcanolamine en $C_2$ à $C_{12}$,
A représente un reste de benzène ou de pyridine, qui est éventuellement encore substitué, et
B représente un reste 1,4-phénylène, éventuellement encore substitué, et
n représente 1, 2 ou 3.

**2.** Colorants azoïques selon la revendication 1, caractérisés en ce que K représente un composant de copulation de formule (2), dans laquelle $R_1$ et $R_2$ représentent chacun, indépendamment l'un de l'autre, un atome d'hydrogène ou un groupe alkyle en $C_1$ à $C_4$.

**3.** Colorants azoïques selon la revendication 2, caractérisés en ce que K représente un composant de copulation de formule (2), dans laquelle $Y_1$ et $Y_2$ sont identiques et représentent chacun un groupe =O ou =NH.

**4.** Colorants azoïques selon la revendication 2, caractérisés en ce que K représente un composant de copulation de formule (2), dans laquelle $Y_3$ représente un groupe =O, =NH ou =N-CN.

**5.** Colorants azoïques selon la revendication 2, caractérisés en ce que K représente un composant de copulation de formule (2), dans laquelle $Y_1$, $Y_2$ et $Y_3$ représentent chacun un groupe =O.

**6.** Colorants azoïques selon l'une des revendications 1 à 5, caractérisés en ce que R représente un atome d'hydrogène, un groupe alkyle en $C_1$ à $C_6$, un groupe alcoxy en $C_1$ à $C_4$, un groupe NH-acyle ou un groupe sulfophényle.

**7.** Colorants azoïques selon la revendication 6, caractérisés en ce que R représente un atome d'hydrogène, un groupe alcoxy en $C_1$ à $C_4$ ou un groupe alkyle en $C_1$ à $C_4$.

**8.** Colorants azoïques selon la revendication 7, caractérisés en ce que R représente un atome d'hydrogène ou un groupe méthoxy ou méthyle.

**9.** Colorants azoïques selon l'une des revendications 1 à 8, caractérisés en ce que X représente un atome d'oxygène ou d'azote.

**10.** Colorants azoïques selon l'une des revendications 1 à 9, caractérisés en ce que Z représente un atome d'azote.

**11.** Colorants azoïques selon l'une des revendications 1 à 10, caractérisés en ce que A représente un reste de benzène ou un reste de pyridine, qui n'est pas encore substitué.

**12.** Colorants azoïques selon l'une des revendications 1 à 11, caractérisés en ce que A représente un reste de benzène, non encore substitué, X représente un atome d'oxygène, Z représente un atome d'azote et R représente un atome d'hydrogène.

**13.** Colorants azoïques selon l'une des revendications 1 à 12, caractérisés en ce que le reste 1,4-phénylène B n'est pas encore substitué.

**14.** Colorants azoïques de formule (1) selon la revendication 1, dans lesquels R représente un atome d'hydrogène, un groupe alkyle en $C_1$ à $C_4$ ou un groupe alcoxy en $C_1$ à $C_4$, X représente un atome d'oxygène ou d'azote, Z représente un atome d'azote, K représente un reste de formule (2), dans laquelle $R_1$ et $R_2$ représentent chacun, indépendamment l'un de l'autre, un atome d'hydrogène ou un groupe alkyle en $C_1$ à $C_4$, $Y_1$ et $Y_2$ sont identiques et représentent chacun un groupe =O ou =NH, $Y_3$ représente un groupe =O, =NH ou =N-CN, M représente un cation $H^+$, $Na^+$, $K^+$ ou $NH_4^+$, ou la forme protonée d'une alcanolamine en $C_2$ à $C_6$, A représente un reste de benzène et B représente un reste 1,4-phénylène, qui est non-substitué ou substitué par un substituant sulfo, chlore, méthoxy ou méthyle.

**15.** Colorants azoïques selon la revendication 14, dans lesquels R représente un atome d'hydrogène, ou un groupe alkyle ou alcoxy en $C_1$ à $C_4$, X représente un atome d'oxygène, Z représente un atome d'azote, K représente un reste de formule (2), dans laquelle $R_1$ et $R_2$ sont des atomes d'hydrogène, $Y_1$ et $Y_2$ représentent chacun un groupe =O, et $Y_3$ représente un groupe =O ou =N-CN, M représente un cation $Li^+$ ou $Na^+$, ou la forme protonée d'une alcanolamine en $C_4$ à $C_6$, A représente un reste de benzène non encore substitué et B représente un reste 1,4-phénylène non encore substitué.

**16.** Colorants azoïques selon la revendication 1, de formule :

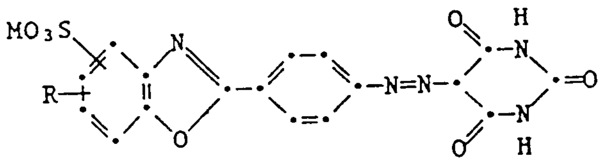

(6)

dans laquelle M et R ont les significations indiquées dans la revendication 1.

**17.** Procédé de préparation des composés de formule (1) selon la revendication 1, caractérisé en ce que l'on diazote une amine de formule :

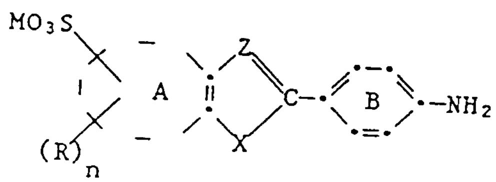

(7)

et fait réagir l'amine diazotée avec un composant de copulation de formule (2), (3) ou (4), les symboles R, M, X, Z, A, B, $Y_1$, $Y_2$, $Y_3$, $R_1$ à $R_7$, Q, $Q_1$ et n ayant les significations indiquées dans la revendication 1.

**18.** Composés de formule :

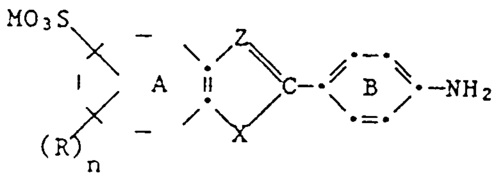

(7)

dans laquelle R, M, X, Z, A, B et n ont les significations indiquées dans la revendication 1.

**19.** Composés de formule :

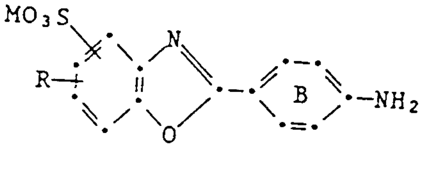

(8)

dans laquelle R représente un atome d'hydrogène ou d'halogène, ou un groupe alkyle en $C_1$ à $C_4$, alcoxy en $C_1$ à $C_4$, nitro, CN, $-NHR_1$, -NH-acyle, phénoxy, -COOH, $-CONHR_1$ ou phényle éventuellement substitué, $R_1$ représentant un atome d'hydrogène, un groupe alkyle en $C_1$ à $C_6$ éventuellement substitué ou un groupe phényle éventuellement substitué, et

M représente un cation $H^+$, $Li^+$, $Na^+$, $K^+$ ou $NH_4^+$, ou la forme protonée d'une trialkylamine en $C_4$ à $C_{12}$, d'une diamine en $C_4$ à $C_{12}$ ou d'une alcanolamine en $C_2$ à $C_{12}$, et le noyau B peut être encore substitué.

**20.** Utilisation des composés de formule (1) selon la revendication 1 comme colorants pour la teinture et l'impression de matières textiles, du papier et du cuir, et pour la préparation d'encres.

**21.** Utilisation selon la revendication 20 pour la coloration et l'impression de papier de toutes sortes.

**22.** Le papier coloré avec les colorants de formule (1) selon la revendication 1.